# EUROPÄISCHE PATENTSCHRIFT

(11) **EP 3 981 841 B1**
(45) Veröffentlichungstag und Bekanntmachung des Hinweises auf die Patenterteilung: **31.07.2024**
(21) Anmeldenummer: 20200419.8
(22) Anmeldetag: 06.10.2020
(51) Int. Cl.: C09D 5/00, C09D 5/32, C09D 5/02, C09D 7/41, C08K 5/00

(54) **BODENBELAG ENTHALTEND UV-NACHWEISBARE GRUNDIERUNG**
FLOOR COVERING CONTAINING UV-TRACEABLE PRIMER
REVÊTEMENT DE SOL COMPRENANT UNE COUCHE PRIMAIRE DÉTECTABLE AUX UV

(43) Veröffentlichungstag der Anmeldung: 13.04.2022
(73) Patentinhaber: Sika Technology AG, 6340 Baar (CH)
(72) Erfinder: Ubbenhorst, Vera, 48712 Gescher (DE); Benighaus, Tobias, 48165 Münster (DE); Wevering, Rosalin, 48161 Münster (DE)
(74) Vertreter: Sika Patent Attorneys

(56) Entgegenhaltungen:
- WO-A1-2010/108762
- WO-A1-2019/037805
- DE-A1- 102004 058 584

## Beschreibung

### Technisches Gebiet

Die Erfindung betrifft Bodenbeläge umfassend Bodenbeschichtungen wie Kunstharzböden oder Verklebungen wie verklebtes Parkett enthaltend eine UV-nachweisbare Grundierung.

### Stand der Technik

Es gibt eine Vielzahl von unterschiedlichen Konstruktionen, die als Bodenbeläge zum Einsatz kommen. Beispielsweise werden hierfür Flächenmaterialien wie Parkett verwendet, die mit einer Verklebung fixiert werden. In letzter Zeit werden vermehrt Kunstharzböden als Bodenbeläge verwendet.

Untergründe, die mit einer Bodenbeschichtung oder Verklebung versehen werden sollen, werden häufig zur Vorbereitung mit einer Grundierung versehen. Die Grundierung wird auch als Primer bezeichnet und dient z.B. zur Bereitstellung einer glatten Oberfläche und/oder zur Verbesserung der Haftung der anschließend aufzubringenden Schichten und/oder zur Verminderung des Feuchtigkeitsaustausches zwischen Untergrund und Bodenbelag.

Der Nachweis des erfolgten Auftrags dieser Grundierung ist im Falle von filmbildenden Grundierungen von Auge teilweise möglich. Dies ist jedoch nur für filmbildende Grundierungen der Fall. In den Untergrund eindringende Grundierungen, auch Tiefengrundierungen genannt, können visuell nicht identifiziert werden. Zur weiteren Analyse müssen Proben von der Baustelle entnommen und in den Labors analysiert werden. Dort können Art und Menge des Polymers über Techniken wie IR-Spektroskopie, HS-GC / MS-Spektroskopie oder thermogravimetrische Analyse identifiziert werden.

Alternative Möglichkeiten zur Produktkennzeichnung sind die Zugabe spezifischer Substanzen, die später identifiziert werden können, wie z. B. spezifische ungiftige Schwermetalle, die normalerweise nicht Teil des Produkts oder der Anwendungsumgebung sind.

Lösungen nach dem Stand der Technik für das Problem, Tiefengrundierungen und von Auge schwer sichtbare filmbildende Grundierungen, beispielsweise bei einem Schadenfall oder zur Qualitätskontrolle, einfach und schnell zu nachzuweisen, sind von grossem Interesse. Im Falle einer Zugabe spezifischer Substanzen ist es kritisch, dass dadurch die Qualität und Eigenschaften der Grundierungen, insbesondere die Lagerstabilität, nicht beeinträchtigt werden. Weiter sollte der Nachweis auch über einen langen Zeitraum nach der der Applikation der Grundierung, insbesondere nach einem halben Jahr oder mehr, noch gut möglich sein.

In der WO 03/038408 A2 wird ein Verfahren zum Nachweis von Abnutzung von Bodenbelägen offenbart. Dabei enthält die oberste oder die unmittelbar darunterliegende Schicht eine fluoreszierende Verbindung. Der Nachweis der Abnutzung erfolgt dabei über das Erfassen des Vorhandenseins oder Abwesenheit von Fluoreszenz.

Die DE 102004058584 A1 betrifft strahlungshärtbare Beschichtungsmassen enthaltend NIR-Photoinitiatoren, neue Formulierungen von NIR-Photoinitiatoren und deren Verwendung. Diese NIR-Photoinitiatorsysteme weisen einerseits eine gute Löslichkeit auf und andererseits eine gute Photoaktivierbarkeit durch NIR-Strahlung.

Die WO 2019037805 A1 offenbart Fugenmassen auf der Basis eines Acrylats oder eines Gemisches von mindestens zwei Acrylaten, wobei diese lichthärtend sind oder in einem dual-cure Prozess aushärtbar sind, in welchem die Fugenmassen licht- und feuchtigkeitshärtend sind.

Die WO 2010108762 A1 zeigt Zusammensetzung umfassend als wässrige Dispersion Benzophenon-haltige (Meth)acrylatpolymere in Mischung mit von diesen verschiedenen (Meth)acrylatpolymeren. Diese Zusammensetzungen ermöglichen unter Inkorporation von polymergebundenen UV-härtbaren (Meth)acrylatpolymeren in Acrylatdispersionen Beschichtungen oder Überzügen auf mineralischen Substraten.

### Darstellung der Erfindung

Die Aufgabe der vorliegenden Erfindung bestand daher in der Bereitstellung von Bodenaufbauten mit Bodenbelägen umfassend Bodenbeschichtungen oder Verklebungen mit einer Grundierung, bei denen die Grundierung einfach, schnell und über einen langen Zeitraum nachzuweisen ist. Weiter sollen Qualität und Eigenschaften der Grundierungen, insbesondere die Lagerstabilität, dadurch nicht beeinträchtigt werden.

Die Aufgabe konnte überraschenderweise dadurch gelöst werden, dass eine Grundierung erhalten aus einer wässrigen Dispersion von mindestens einem Acrylpolymer enthaltend 0.001 - 0.2 Gew.-% von mindestens einem System auf Benzoxazolbasis, bezogen auf das Gesamtgewicht der wässrigen Dispersion, eingesetzt wird.

Die Erfindung betrifft daher einen Bodenaufbau auf einem Untergrund 1 umfassend eine Grundierung 2 und einen über der Grundierung befindlichen Bodenbelag 3 umfassend eine Bodenbeschichtung und/oder eine Verklebung, dadurch gekennzeichnet, dass die Grundierung 2 erhalten wird aus einer wässrigen Dispersion von mindestens einem Acrylpolymer enthaltend 0.001 - 0.2 Gew.-%, 0.005 - 0.1 Gew.-%, insbesondere 0.002 - 0.05 Gew.-%, 0.005 - 0.03 Gew.-%, besonderes bevorzugt 0.01 - 0.02 Gew.-%, von mindestens einem System auf Benzoxazolbasis, bezogen auf das Gesamtgewicht der wässrigen Dispersion.

Es wurde überraschenderweise festgestellt, dass solche Systeme in wässrigen Dispersionen enthaltend mindestens ein Acrylpolymer die Viskosität auch nach einer Lagerzeit von 4 Wochen nicht massgeblich erhöhen und somit die Lagerstabilität nicht beeinträchtigen. Weiter erlauben diese Systeme eine gute Nachweisbarkeit der Beschichtung auf dem Untergrund, sowohl kurz nach Applikation der Beschichtung als auch 6 Monate danach. Insbesondere zeigt sich keine Verminderung der Nachweisbarkeit über die Zeit.

Die Erfindung betrifft ferner ein Verfahren zur Herstellung des erfindungsgemäßen Bodenaufbaus. Bevorzugte Ausführungsformen der Erfindung sind in den unabhängigen Ansprüchen wiedergegeben.

### Kurze Beschreibung der Zeichnung

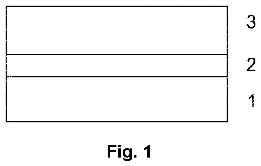

Die Figur 1 gibt schematisch einen Bodenaufbaut gemäß der Erfindung wieder.

### Weg zur Ausführung der Erfindung

Der erfindungsgemäße Bodenaufbau umfasst auf einem Untergrund 1 eine Grundierung 2 und einen über der Grundierung befindlichen Bodenbelag 3 umfassend eine Bodenbeschichtung und/oder eine Verklebung, wobei die Grundierung erhalten wird aus einer wässrigen Dispersion von mindestens einem Acrylpolymer enthaltend 0.001 - 0.2 Gew.-%, 0.005 - 0.1 Gew.-%, insbesondere 0.002 - 0.05 Gew.-%, 0.005 - 0.03 Gew.-%, besonderes bevorzugt 0.01 - 0.02 Gew.-%, von mindestens einem System auf Benzoxazolbasis, bezogen auf das Gesamtgewicht der wässrigen Dispersion.

Als Untergrund für den Bodenaufbau eignen sich prinzipiell alle Untergründe oder Substrate, auf denen Bodenbeläge üblicherweise aufgebracht werden, z.B. solche, die in Bauwerken für den Bodenaufbau verwendet werden. Vorzugsweise handelt es sich um auf mineralischen Bindemitteln basierende Untergründe.

Der Begriff "mineralische Bindemittel" bezeichnet in dem vorliegenden Dokument Bindemittel, die in Gegenwart von Wasser in einer Hydratationsreaktion unter Bildung fester Hydrate oder Hydratphasen reagieren. Insbesondere bezieht sich der Begriff "Mineralbindemittel" in dem vorliegenden Dokument auf nicht hydratisierte Mineralbindemittel, das heisst Mineralbindemittel, die nicht in einer Hydratationsreaktion umgesetzt wurden und / oder in Gegenwart von Wasser eine Hydratationsreaktion eingehen können . Geeignete Mineralbindemittel umfassen hydraulische, nichthydraulische, latente hydraulische und puzzolanische Bindemittel.

Der Begriff "hydraulisches Bindemittel" bezeichnet in dem vorliegenden Dokument Substanzen, die infolge chemischer Reaktionen mit Wasser aushärten ("Hydratationsreaktionen") und Hydrate erzeugen, die nicht wasserlöslich sind. Insbesondere finden die Hydratationsreaktionen des hydraulischen Bindemittels im Wesentlichen unabhängig vom Wassergehalt statt. Dies bedeutet, dass hydraulische Bindemittel aushärten und ihre Festigkeit behalten können, selbst wenn sie Wasser ausgesetzt sind, beispielsweise unter Wasser oder unter Bedingungen hoher Luftfeuchtigkeit. Beispiele für hydraulische Bindemittel sind Zement, Zementklinker und hydraulischer Kalk. Im Gegensatz dazu sind "nichthydraulische Bindemittel" wie luftgelöschter Kalk (nichthydraulischer Kalk) und Gips zumindest teilweise wasserlöslich und müssen trocken gehalten werden, um ihre Festigkeit zu erhalten.

Der Begriff "Gips" bezeichnet in dem vorliegenden Dokument jede bekannte Form von Gips, insbesondere Calciumsulfat-Dehydrat, Calciumsulfat-α-Hemihydrat, Calciumsulfat-ß-Hemihydrat oder Calciumsulfat-Anhydrit oder Gemische davon.

Der Begriff "latentes hydraulisches Bindemittel" bezeichnet in diesem Dokument bestimmte Betonzusätze vom Typ II mit latentem hydraulischem Charakter gemäß DIN EN 206-1: 2000. Diese Materialien sind Calciumaluminosilikate, die beim Mischen nicht direkt oder zu langsam aushärten können Wasser. Der Härtungsprozess wird in Gegenwart von alkalischen Aktivatoren beschleunigt, die die chemischen Bindungen in der amorphen (oder glasartigen) Phase des Bindemittels aufbrechen und die Auflösung ionischer Spezies und die Bildung von Calciumaluminosilicathydratphasen fördern. Beispiele für latente hydraulische Bindemittel umfassen granulierte Hochofenschlacke.

Der Begriff "puzzolanische Bindemittel" bezeichnet in diesem Dokument insbesondere Betonzusätze vom Typ II mit puzzolanischem Charakter gemäß DIN EN 206-1: 2000. Diese Materialien sind siliciumhaltige oder Aluminosilicatverbindungen, die mit Wasser und Calciumhydroxid unter Bildung von Calciumsilicathydrat reagieren oder Calciumaluminosilicathydratphasen. Puzzolanbindemittel umfassen natürliche Puzzolane wie Trass und künstliche Puzzolane wie Flugasche und Silikastaub.

Besonders bevorzugt handelt es sich um auf hydraulisch abbindenden mineralischen Bindemitteln, insbesondere Zement oder Gips, basierende Untergründe.

Ganz besonders geeignete Untergründe sind Beton und Estrich. Vorzugsweise handelt es sich um poröse Untergründe.

Die Grundierung 2 wird erhalten aus einer wässrigen Dispersion von mindestens einem Acrylpolymer enthaltend 0.001 - 0.2 Gew.-%, 0.005 - 0.1 Gew.-%, insbesondere 0.002 - 0.05 Gew.-%, 0.005 - 0.03 Gew.-%, besonderes bevorzugt 0.01 - 0.02 Gew.-%, von mindestens einem System auf Benzoxazolbasis, bezogen auf das Gesamtgewicht der wässrigen Dispersion.

Der Begriff "Acrylpolymer" bezieht sich in dem vorliegenden Dokument auf Homopolymere, Copolymere und höhere Zwischenpolymere eines Acrylmonomers mit einem oder mehreren weiteren Acrylmonomeren und / oder mit einem oder mehreren anderen ethylenisch ungesättigten Monomeren. Der Begriff "Acrylmonomer" bezieht sich in dem vorliegenden Dokument auf (Meth)acrylate, (Meth)acrylsäure und Derivate davon, beispielsweise Amide von (Meth)acrylsäure oder Nitrile von (Meth)acrylsäure.

Bevorzugte Acrylpolymere enthalten mindestens 30 Gew.-%, bevorzugter mindestens 40 Gew.-%, am bevorzugtesten mindestens 50 Gew.-% Acrylmonomere. Der Begriff "wässrige Zusammensetzung" bezieht sich in dem vorliegenden Dokument auf eine Zusammensetzung, in der Wasser das primäre Auflösungsmedium oder Lösungsmittel ist. Vorzugsweise bezieht sich die "wässrige Zusammensetzung" auf eine Zusammensetzung, in der Wasser das einzige Lösungsmedium oder Lösungsmittel ist.

Besonders geeignete Acrylpolymere für die wässrige Dispersion bestehen zum größten Teil aus (Meth) acrylaten von Alkoholen mit 1 bis 24 Kohlenstoffatomen. Bevorzugte Acrylpolymere enthalten als polymerisierte Einheiten mindestens 25 Gew .-%, bevorzugter mindestens 50 Gew .-%, am bevorzugtesten mindestens 75 Gew .-% dieser Acrylmonomere.

Bevorzugte ethylenisch ungesättigte Monomere sowie Derivate davon, die als Co-monomere mit den Acrylmonomeren verwendet werden können, sind ausgewählt aus der Liste bestehend aus Vinylester und Allylester von Carbonsäuren mit 1 bis 20 Kohlenstoffatomen; Vinylether von Alkoholen mit 1 bis 8 Kohlenstoffatomen; Vinylaromaten insbesondere Styrol; nichtaromatische Kohlenwasserstoffe mit 2 bis 8 Kohlenstoffatomen und mindestens einer olefinischen Doppelbindung und α- und β-ungesättigte mono- oder di-carbonsäuren mit 3 bis 6 Kohlenstoffatomen, insbesondere Vinylaromaten, besonders bevorzugt Styrol.

Vorzugsweise handelt es sich bei mindestens einen Acrylpolymer um ein Copolymer eines Acrylmonomers mit einem oder mehreren anderen ethylenisch ungesättigten Monomeren, insbesondere um ein Copolymer eines Acrylmonomers mit Vinylaromaten, insbesondere Styrol, besonders bevorzugt handelt es sich um ein Styrol-Acrylester-Copolymer.

Vorzugsweise hat das mindestens eine Acrylpolymer eine Glasübergangstemperatur (Tg) im Bereich von -40 bis 20°C, bevorzugter 0 bis 20°C. Geeignete wässrige Dispersionen von Acrylpolymeren sind beispielsweise von der BASF im Handel erhältlich, wie Arconal^{®} 5041, Arconal^{®} S 410, Arconal^{®} S 559, Arconal^{®} S 813, Arconal^{®} S 790, Arconal^{®} S 533, Arconal^{®} A 508, Arconal^{®} ECO 6258 ; von Wacker Chemie AG wie Vinnapas^{®} 202 HD, Vinnapas^{®} 240 HD, Vinnapas^{®} 538 ED, Vinnapas^{®} 550 ED; von Celanese wie Mowilith^{®} DM 1340; von Dow wie Primal^{®} CA 162 und Primal^{®} CA 172.

Vorzugsweise weist die wässrige Polymerdispersion einen Feststoffgehalt von 10 - 60 Gew.-%, 25 - 55 Gew.-%, vorzugsweise 35 - 55 Gew.-%, auf, bezogen auf das Gesamtgewicht der wässrigen Polymerdispersion.

Vorzugsweise weist die wässrige Polymerdispersion eine Partikelgrösse von 10 - 300 nm, insbesondere 20 - 150 nm, auf. Die Partikelgrösse wird vorzugsweise bestimmt durch Laserdiffraktometrie.

Die wässrige Polymerdispersion kann zwei oder mehr verschiedene Acrylpolymere mit unterschiedlichen Glasübergangstemperaturen und unterschiedlichen Monomerzusammensetzungen umfassen. Wässrige Polymerdispersionen, die zwei oder mehr verschiedene Acrylpolymere umfassen, können durch Mischen von im Handel erhältlichen Acrylpolymerdispersionen wie den oben beschriebenen hergestellt werden.

Die wässrige Polymerdispersion kann ferner weiter Additive ausgewählt aus der Liste bestehend aus Tenside, Entschäumer, Netzmittel, Konservierungsmittel und Verdicker enthalten.

Vorzugsweise beträgt der Anteil an Additiven 0.05 - 5 Gew.-%, 0.1 - 3 Gew.- %, 0.1 - 2 Gew.-%, vorzugsweise 0.15 - 1 Gew.-%, vorzugsweise 0.15 - 0.3 Gew.-%, auf, bezogen auf das Gesamtgewicht der die wässrigen Polymerdispersion.

Vorzugsweise besteht die wässrige Polymerdispersion zu mehr als 80 Gew.-%, zu mehr als 90 Gew.-%, zu mehr als 95 Gew.-%, zu mehr als 98 Gew.-%, zu mehr als 99 Gew.-%, zu mehr als 99.5 Gew.-%, bezogen auf das Gesamtgewicht der die wässrigen Polymerdispersion, aus den vorgenannten Additiven, Acrylpolymeren, System auf Benzoxazolbasis und Wasser.

Die wässrige Dispersion enthaltend mindestens ein Acrylpolymer enthält 0.001 - 0.2 Gew.-% von mindestens einem System auf Benzoxazolbasis, bezogen auf das Gesamtgewicht der wässrigen Dispersion. Vorzugsweise beträgt der Anteil am System auf Benzoxazolbasis, bezogen auf das Gesamtgewicht der wässrigen Dispersion 0.005 - 0.1 Gew.-%, insbesondere 0.002 - 0.05 Gew.- %, 0.005 - 0.03 Gew.-%, besonderes bevorzugt 0.01 - 0.02 Gew.-%. Anteile von mehr als 0.2 Gew.-% sind dahingehend von Nachteil, dass sie kommerziell aufgrund des hohen Preises nicht mehr interessant sind.

System auf Benzoxazolbasis sind insbesondere ausgewählt aus der Liste bestehend aus 4,4 '- (E) -bis (benzoxazolyl) stilben, Derivate von 4,4 '- (E) -bis (benzoxazolyl) stilben, 2,5-Bis (benzoxazol-2-yl) thiophen und Derivate von2,5-Bis (benzoxazol-2-yl) thiophen, vorzugsweise ausgewählt aus der Liste bestehend aus 2,5-Bis (Benzoxazol-2-yl) thiophen und Derivate von 2,5-Bis (Benzoxazol-2-yl) thiophen. Am meisten bevorzugt ist 2,5-Bis (benzoxazol-2-yl) thiophen.

Überraschenderweise wurde gefunden, dass diese Systeme in wässrigen Dispersionen enthaltend mindestens ein Acrylpolymer die Viskosität auch nach einer Lagerzeit von 4 Wochen nicht massgeblich erhöhen und somit die Lagerstabilität nicht beeinträchtigen. Weiter erlauben diese Systeme eine gute Nachweisbarkeit der Beschichtung auf dem Untergrund, sowohl kurz nach Applikation der Beschichtung als auch 6 Monate danach. Insbesondere zeigt sich keine Verminderung der Nachweisbarkeit über die Zeit. Dies ist beispielsweise ersichtlich in den Tabellen 1 und 2.

Überraschenderweise wurde weiter gefunden, dass andere Systeme diese Vorteile nicht zeigen. So führt die Verwendung von einem Styrylenbenzolderivat (Ref.2 in Tabelle 1 und Ref. 6 in Tabelle 2) in solchen wässrigen Dispersionen zu einer starken Erhöhung der Viskosität und zu ungenügender Nachweisbarkeit. Die Verwendung von einem Stilbendisulfonsäurederivat (Ref.3 in Tabelle 1 und Ref. 7 in Tabelle 2) in solchen wässrigen Dispersionen ebenfalls zu einer starken Erhöhung der Viskosität und somit zu einer Verminderung der Lagerstabilität und es erlaubt keine ausreichende Nachweisbarkeit. Letztlich führt die Verwendung von einem Benzoxazinon-Derivat (Ref.4 in Tabelle 1 und Ref. 8 in Tabelle 2) zu ungenügender Nachweisbarkeit, die über die Zeit zusätzlich stark abfällt.

Sollte die wässrige Polymerdispersion zusätzliche optische Aufheller enthalten, ist es bevorzugt, dass der Anteil dieser zusätzlichen optische Aufheller weniger als 30 Gew.-%, weniger als 20 Gew.-%, weniger als 10 Gew.-%, weniger als 5 Gew.-%, weniger als 1 Gew.-%, weniger als 0.1 Gew.-%, beträgt, bezogen auf das Gesamtgewicht der in der wässrigen Dispersion enthaltenen System auf Benzoxazolbasis. Insbesondere ist die wässrige Polymerdispersion frei von erwähnten zusätzlichen optischen Aufhellern. Bei den erwähnten zusätzlichen optischen Aufhellern sind nicht die vorgehend erwähnten Systeme auf Benzoxazolbasis gemeint.

Der Begriff "optische Aufheller", wie er hier verwendet wird, bezieht sich auf optische Aufheller (OBAs), fluoreszierende Aufheller (FBAs) oder fluoreszierende Weissmacher (FWAs). Typischerweise sind dies Farbstoffe, die Licht im UV- und Violettbereich (normalerweise 200 bis 400 nm) des elektromagnetischen Spektrums absorbieren und Licht im sichtbaren Bereich (typischerweise 400 bis 700 nm) wieder abgeben

Für den Nachweis der Systeme auf Benzoxazolbasis werden typischerweise Energiequellen für ultraviolette (UV) Strahlung verwendet, vorzugsweise handgehaltene UV-Lampen.

Es kann vorteilhaft sein, wenn es sich bei der Grundierung 2 um eine sogenannte Tiefengrundierung handelt, welche aufgrund ihrer Viskosität und Partikelgrösse in einen porösen Untergrund einzudringen vermag. Da solche Systeme typischerweise keinen oder nur schwer von Auge erkennbaren durchgehenden Film auf dem Untergrund hinterlassen, ist bei ebensolchen ein Nachweis des Systems auf Benzoxazolbasis besonders hilfreich. Vorzugsweise weist die wässrige Dispersion, auf welcher eine solche Tiefengrundierung basiert, eine Viskosität ein Tag nach Herstellung von < 3'000 mPas, < 1'500 mPas, < 1'000 mPas, insbesondere < 800 mPas, gemessen mit einem Brookfield DV1-Viskosimeter mit Spindel 4 bei 20 U / min bei 23°C, auf.

Vorzugsweise weist die wässrige Dispersion, auf welcher eine solche Tiefengrundierung basiert, eine Partikelgrösse von 10 - 70 nm, insbesondere 20 - 50 nm, auf.

Vorzugsweise ist eine solche Tiefengrundierung zu mehr als 50%, mehr als 70%, mehr als 90%, mehr als 95%, mehr als 99% im Untergrund 1 angeordnet, bezogen auf die Gesamtdicke der Tiefengrundierung, insbesondere wenn es sich um einen saugfähigen Untergrund handelt. Vorzugsweise hat eine solche Tiefengrundierung eine Eindringtiefe in den Untergrund von 1 - 10 mm, insbesondere 2-5 mm.

Es kann weiter vorteilhaft sein, wenn es sich bei der Grundierung 2 um eine sogenannte filmbildende Grundierung handelt, welche aufgrund ihrer Viskosität und Partikelgrösse kaum oder nicht in einen porösen Untergrund einzudringen vermag. Solche Systeme bilden typischerweise einen von Auge erkennbaren durchgehenden Film auf dem Untergrund, können aber aufgrund ihrer Dicke und/oder Farbe schwer zu erkennen sein, insbesondere in Fällen, wo diese nachträglich in einem erstellen Bodenaufbau nachgewiesen werden müssen. Für diese Fälle ist ein System auf Benzoxazolbasis hilfreich.

Vorzugsweise weisen die wässrige Dispersion, auf welcher eine solche filmbildende Grundierung basiert, eine Viskosität ein Tag nach Herstellung von > 3'000 mPas, > 5'000 mPas, ≥ 8'000 mPas, insbesondere 8'000 - 20'000 mPas, gemessen mit einem Brookfield DV1-Viskosimeter mit Spindel 4 bei 20 U / min bei 23°C, auf.

Vorzugsweise weist die wässrige Dispersion, auf welcher eine solche filmbildende Grundierung basiert, eine Partikelgrösse von 80 - 150 nm, insbesondere 90 - 120 nm, auf.

Vorzugsweise hat eine solche filmbildende Grundierung eine Trockenschichtdicke von 0.05 - 0.5 mm, insbesondere 0.1 - 0.2, mm.

Vorzugsweise wird die Grundierung 2 erhalten aus der vorgenannten wässrigen Dispersion auf poröse Untergründe und/oder Untergründe mit rauer Oberfläche aufgebracht.

Die wässrige Dispersion kann nach den herkömmlichen Auftragsverfahren auf den Untergrund aufgebracht werden. Herkömmliche Auftragsverfahren sind vorzugsweise Auftragsverfahren mit Walzen, Rollen, Besen oder Pinseln.

Auf der Grundierung 2 befindet sich erfindungsgemäß ein Bodenbelag umfassend eine Bodenbeschichtung und/oder eine Verklebung. Die Verklebung kann eine vollflächige oder teilflächige Klebschicht sein. Die Bodenbeschichtung oder Klebschicht umfasst mindestens eine Bodenbeschichtung bzw. Klebschicht, kann aber auch zwei oder mehr dieser Schichten umfassen. Der Bodenbelag kann auch eine oder mehrere Schichten aus einem Flächenmaterial umfassen.

Die Bodenbeschichtung oder Verklebung bzw. Klebschicht umfasst oder ist bevorzugt mindestens eine Schicht, insbesondere eine Kunstharzschicht oder eine voll- oder teilflächig applizierte Klebschicht, die durch Auftragen und Härten eines flüssigen oder pastösen Materials gebildet ist. Diese Schicht ist bevorzugt unmittelbar über der Grundierung angeordnet.

Als flüssige oder pastöse Materialien für die Bildung der Schicht, insbesondere der Kunstharzschicht oder Klebschicht, können z.B. Reaktionsharze bzw. Klebstoffe verwendet werden. Die Verwendung von Reaktionsharzen zur Herstellung von Kunstharzböden ist bevorzugt.

Kunstharzschichten, die auch als Reaktionsharzschichten bezeichnet werden, werden aus einem Reaktionsharz, das gegebenenfalls Additive enthalten kann, gebildet. Zur Bildung der Kunstharzschichten werden Reaktionsharze, gewöhnlich mithilfe eines Härters, der auch Beschleuniger enthalten kann, zur Reaktion gebracht. Die Reaktion führt zur Härtung des Reaktionsharzes.

Solche Reaktionsharz-Beschichtungszusammensetzungen sind in großer Vielfalt im Handel erhältlich. Häufig handelt es sich um Zweikomponentensysteme, bei denen die eine Komponente das Reaktionsharz und die andere den Härter oder Beschleuniger umfasst. Ferner werden auch 3- oder höherkomponentige Systeme eingesetzt. Es sind auch ein¬komponentige Systeme möglich. Bei mehrkomponentigen Systemen werden die Komponenten vor Gebrauch gemischt und dann verarbeitet.

Beispiele für geeignete herkömmliche Reaktionsharze zur Bildung der Kunstharzschicht sind ausgewählt aus der Liste bestehend aus Epoxidharze, Polyurethane, Polyharnstoffe, Polyacrylate, Polymethacrylate und Gemische von Polyurethanen und Polyharnstoffen, Harze auf Basis silan-terminierter Präpolymere (STP), Kunstharze auf Basis polymermodifizierter mineralischer Bindemittel. Vorzugsweise handelt es sich um Kunstharze auf Basis polymermodifizierter mineralischer Bindemittel, insbesondere um polymermodifizierte hydraulisch abbindende Bindemittel, vorzugsweise polymermodifizierte Zemente oder Gips. Vorzugsweise ist das mineralische Bindemittel vergütet mit 0.1 - 5 Gewichts-% Polymeren, insbesondere 0.2 - 3 Gewichts-% Polymeren, besonders bevorzugt 0.5 - 2 Gewichts-% Polymeren, bezogen auf das Gesamtgewicht des vergüteten mineralischen Bindemittels.

Die Reaktionsharz-Beschichtungszusammensetzung bzw. die Kunstharzschicht kann nach Bedarf ein oder mehrere Additive enthalten. Durch Zugabe von Additiven können z.B. die Viskosität oder die Eigenschaften der Kunstharzschichten, z.B. die mechanischen Eigenschaften oder die Farbe, eingestellt werden. Beispiele für mögliche Additive sind organische Lösemittel, Wasser, farbgebende Mittel, wie Farbstoffe, Pigmente oder Farbchips, Füllstoffe, Fasern, Glashohlkugeln, Emulgatoren, Thixotropiermittel, Filmbildehilfsmittel, Verlaufshilfsmittel, Entlüftungshilfsmittel sowie Antiabsetzmittel.

Als Handelsprodukte für Reaktionsharzsysteme zur Bildung der Kunstharzschichten können beispielhaft Sikafloor^{®}-330, Sikafloor^{®}-350 oder Sikafloor^{®}-264 genannt werden.

Es ist bevorzugt, dass eine Kunstharzschicht unmittelbar über der Grundierung angeordnet ist. In einer bevorzugten Ausführungsform umfasst oder ist der Bodenbelag eine oder mehrere Kunstharzschichten. Polyurethan-Kunstharzschichten sind bevorzugt. Besonders bevorzugt handelt es sich daher bei dem Bodenaufbau um einen Kunstharzboden, der auch als Reaktionsharzboden bezeichnet wird.

Der Bodenbelag kann zusätzlich oder bevorzugt alternativ eine Verklebung bzw. eine Klebschicht umfassen. Zur Bildung der Klebschicht können alle herkömmlichen Kleber bzw. Klebstoffe eingesetzt werden, insbesondere flüssige oder pastöse Kleber. Es ist bevorzugt, dass die Klebschicht unmittelbar über der Grundierung angeordnet ist. Die Klebschicht kann aus einer Klebschicht oder aus zwei oder mehr aufeinander aufgebrachten Klebschichten bestehen. Überraschenderweise wurde gefunden, dass sich die erfindungsgemässen Grundierungen durch die darauf bereits applizierten Verklebungen hindurch mittels UV-Lampen nachweisen lassen. Diese nicht destruktive Art des nachträglichen Nachweises ist schnell und einfach zu führen, von grossem Nutzen für den Anwender und bei unterschiedlichen Arten von Klebstoffen anwendbar.

Die Klebschicht kann vollflächig oder teilflächig ausgebildet sein. Bei einer teilflächigen Klebschicht sind nur Teile der darunterliegenden Gesamtfläche, z.B. die Grundierung, bedeckt. Der vollflächige oder teilflächige Auftrag von Klebstoffschichten zur Verklebung ist dem Fachmann bestens bekannt.

Bei einem vollflächigen Auftrag wird der Klebstoff auf der gesamten zu verklebenden Fläche appliziert. Beim teilflächigen Auftrag des Klebschicht kann der Kleber z.B. in Form von Klebstoffraupen appliziert werden. Der Klebstoff kann z.B. in parallel angeordneten, voneinander beabstandeten länglichen Raupen über die zu verklebende Fläche appliziert werden. Die Raupen können z.B. in Längsrichtung kontinuierlich oder mit Unterbrechungen appliziert werden. Der teilflächige Auftrag kann natürlich auch in einem anderen Muster erfolgen, z.B. die Applikation von Klebstoffraupen in einem Gitter- oder Rautenmuster. Der Fachmann kann für die jeweilige spezielle Anwendung die geeignete Auftragsform ohne weiteres selbst oder anhand der Herstellervorschriften auswählen.

Als Klebstoffe können übliche Klebstoffe für die Verklebung von Flächenmaterialien eingesetzt werden. Typische Klebstoffe sind Klebstoff-Dispersionen, Polyurethan-Klebstoffe, Epoxidharz-Klebstoffe und zementhaltige Klebstoffe. Als Handelsprodukte für geeignete Kleber zur Bildung der Verklebungen bzw. Klebschichten können beispielhaft Parkettklebstoffe, z.B. die Sikaflex^{®}-Kleber und SikaBond^{®}-Kleber für Parkettbodenbeschichtungen von Sika Deutschland GmbH, genannt werden.

Die Klebschicht kann insbesondere dazu dienen, ein Flächenmaterial für den Bodenbelag zu fixieren. In einer bevorzugten Ausführungsform umfasst der Bodenbelag daher ein verklebtes Flächenmaterial, insbesondere ein Flächenmaterial, das mittels einer dazwischenliegenden vollflächig oder teilflächig applizierten Klebschicht auf der Grundierung angeordnet oder fixiert ist.

Beispiele für geeignete Flächenmaterialien sind Verlegeware, Parkett, Laminat, Kunststoffbahnen oder-platten, z.B. aus PVC, Polyolefin, Kautschuk, Linoleum oder Kork, wobei Parkett bevorzugt ist. Bei dem Bodenbelag umfassend Verklebungen handelt es sich bevorzugt um einen verklebten Parkettboden.

Der Bodenbelag weist vorzugsweise eine Gesamtschichtdicke von mindestens 0,5 mm, bevorzugter mindestens 1,0 mm auf. Die Gesamtschichtdicke des Bodenbelags kann je nach Ausführungsart in weiten Bereichen variieren.

Sofern der Bodenbelag eine Bodenbeschichtung, insbesondere eine oder mehrere Kunstharzschichten, umfasst oder ist, kann die Gesamtdicke des Bodenbelags z.B. im Bereich von 1 bis 5 mm liegen. Sofern der Bodenbelag eine Verklebung bzw. eine Klebstoffschicht umfasst, wird der Klebstoff bei vollflächigem Auftrag z.B. in einer Menge von 200 - 1500 g/mm² appliziert, wobei die Dichte des Klebstoffs bevorzugt im Bereich von 1,0 - 1,3 kg/l liegt. Bei teilflächigem Auftrag, z. B. in Form von Klebstoffraupen, beträgt die Auftragsmenge z.B. 500 - 1500 g/mm². Die Raupenhöhe beträgt dabei z.B. 2 - 15 mm.

In einer optionalen Ausführungsform kann der Bodenaufbau ferner eine Versiegelung über dem Bodenbelag aufweisen. Solche Versiegelungen sind in der Technik üblich. Die Versiegelung kann aus einer oder mehreren aufeinander aufgebrachten Schichten bestehen. Für die Versiegelung können Beschichtungszusammensetzungen umfassend Reaktionsharze eingesetzt werden. Beispiele für geeignete Reaktionsharze sind dieselben, die vorstehend für die Kunstharzschichten genannt wurden. Ein Beispiel für ein Handelsprodukt zur Herstellung geeigneter Versiegelungen ist Sikafloor^{®}-310, eine zweikomponentige Polyurethan-Beschichtungszusammensetzung.

Der Bodenbelag kann gegebenenfalls vor Auftrag der Versiegelung abgesandet werden. Das Versiegelungsmittel, z.B. Sikafloor^{®}-310, kann z.B. in einer Menge von 0,1 bis 0,8 g/m² aufgebracht werden. Eine Versiegelung kann insbesondere bei Kunstharzschichten umfassenden Bodenbelägen zweckmäßig sein. Eine Versiegelung kann natürlich auch bei einem Bodenbelag umfassend ein verklebtes Flächenmaterial eingesetzt werden.

Die Erfindung betrifft auch ein Verfahren zur Herstellung des erfindungsgemäßen Bodenaufbaus auf dem Untergrund. Das Verfahren umfasst a) die Grundierung des Untergrunds mit der vorgenannten Grundierung und b) das Aufbringen des Bodenbelags umfassend die Bodenbeschichtung und/oder die Verklebung auf die Grundierung, wobei der Bodenbelag gegebenenfalls mit einer Versiegelung versehen wird.

In einer bevorzugten Ausführungsform umfasst das Aufbringen des Bodenbelags b1) das Auftragen einer Reaktionsharz-Beschichtungszusammensetzung auf die Grundierung und Härten unter Bildung einer Kunstharzschicht oder b2) das voll- oder teilflächige Auftragen eines Klebers auf die Grundierung und Aufkleben eines Flächenmaterials auf die Klebschicht.

In einer bevorzugten Ausführungsform umfasst das Verfahren zusätzlich den Schritt c) des Nachweises des Systems auf Benzoxazolbasis in der Grundierung, insbesondere mittels Ultraviolettstrahlung, insbesondere mit einer UV-Lampe. Dabei kann der Schritt c) vor dem Schritt b) erfolgen.

Der Schritt c) kann jedoch auch nach dem Schritt c) erfolgen, insbesondere mehr als 1 Tag, mehr als 1 Woche, insbesondere mehr als 6 Monate, nach dem Schritt c). Beispielsweise durch eine Probennahme durch eine Bohrung. Die Anmelderin hat gefunden, dass bei einer Probennahme mit einem Durchmesser von 5 cm durch einen erfindungsgemässen Bodenaufbau die Grundierung leicht und deutlich anhand einer fluoreszierenden Linie nachweisen lässt. Da sich die erfindungsgemässe Grundierung durch eine lange UV-Nachweisbarkeit auszeichnet ist dies besonders bevorzugt, insbesondere im Falle von nachträglichen Qualitätskontrollen oder Untersuchungen bei Schadensfällen.

Der Schritt c) kann weiter auch nach dem voll- oder teilflächige Auftragen eines Klebers auf die Grundierung in Schritt b2) erfolgen, insbesondere 0 - 30 min danach. Da sich die erfindungsgemässe Grundierung durch mehre Arten von Klebstoffen hindurch mittels UV-Lampen nachweisen lässt ist eine solche nicht destruktive Art des nachträglichen Nachweises ist schnell und einfach zu führen, von grossem Nutzen für den Anwender.

Der erfindungsgemäße Bodenaufbau eignet sich z.B. in privaten, öffentlichen oder gewerblichen Räumen, z.B. Wohnräumen, Krankenhäusern, Schulen, Werkräumen, Einkaufshäusern, Büros, Lagerhallen, Garagen, Parkhäusern, Tiefgaragen, Produktions- und Industriehallen, Werkstätten, Ausstellungsflächen. Der Bodenbelag ist oder umfasst bevorzugt mindestens eine Kunstharzschicht oder ein Flächenmaterial, das mit einer voll- oder teilflächigen Klebschicht angebunden ist. Der Bodenaufbau eignet sich besonders als Fußboden.

In den Fig. 1 ist ein möglicher erfindungsgemässer Bodenaufbaut gezeigt. Die Fig. 1 zeigt den Aufbau lediglich schematisch und sind nicht maßstabsgetreu. Zusätzliche Schichten sind möglich.

Fig. 1 zeigt einen Bodenaufbau aus einem Untergrund 1, einer darüber (typischerweise filmbildende Grundierung) oder teilweise oder ganz darin (typischerweise Tiefengrundierung) befindlichen Grundierung 2 und einem Bodenbelag 3.

Der Bodenbelag 3 ist vorzugsweise eine Bodenbeschichtung 3, z.B. mindestens eine Kunstharzschicht. Besonders bevorzugt handelt es sich um einen Kunstharzboden mit mindestens einer Kunstharzschicht. Die Bodenbeschichtung 3 kann eine oder mehrere Kunstharzschichten enthalten sowie eine Versiegelung (optional) in dieser Reihenfolge.

Alternativ ist der Bodenbelag 3 vorzugsweise ein Bodenbelag, der aus einer Klebschicht und einem Flächenmaterial gebildet ist. Es können auch zwei oder mehr Klebschichten vorhanden sein.

### Beispiele

Es wurden Bodenaufbauten auf einem Untergrund bestehend aus einer Betonplatte hergestellt. Als Grundierung wurden die in den Tabellen 1 und 2 aufgeführten wässrigen Dispersionen mittels eines Rollers in einer Auftragsmenge von 200 g/m² eingesetzt.

In der filmbildenden Grundierung der Tabelle 1 ergab sich eine Trockendicke von ca. 0.06 mm auf der Betonplatte.

In der Tiefengrundierung der Tabelle 2 ergab sich Eindringtiefe in die Betonplatte von 2 mm.

1 Tag nach Auftrag (Sichtbarkeit unter UV-Licht nach 1 Tag) sowie nach 6 Monaten Lagerung bei 23°C in geschlossenen Behältern (Sichtbarkeit unter UV-Licht nach 6 Monaten) wurde die Oberfläche der Betonplatte mit einer UV-Lichtquelle mit 200 mW bei 365 nm bestrahlt. Die Sichtbarkeit der Grundierung wurde nach folgendem Schema beurteilt:
0: keine Fluoreszenz sichtbar
+: sehr leichte Fluoreszenz ist sichtbar
++: leichte Fluoreszenz ist sichtbar
+++: starke Fluoreszenz
++++: sehr starke Fluoreszenz

1 Tag nach Herstellung der wässrigen Dispersionen wurde die Viskosität mit einem Brookfield DV1-Viskosimeter mit Spindel 4 bei 20 U / min bei 23°C gemessen. Die Viskosität ist in den Tabellen 1 und 2 als " Viskosität nach 1 Tag" ausgewiesen. Danach wurden Proben davon in einem geschlossenen Behälter für 4 Wochen bei 23°C gelagert und erneut mit demselben Verfahren bei 23°C gemessen (Viskosität nach 4 Wochen).

**Tabelle 1**

| Rohstoffe | Ref.1 | Ref.2 | Ref.3 | Ref.4 | Ex.1 | Ex.2 |
|---|---|---|---|---|---|---|
| Styrol-Acrylester-Copolymer Dispersion, Acronal 5041, 50% Feststoffgehalt, Partikelgrösse 100 nm (BASF) | 53.2 | 53.2 | 53.2 | 53.2 | 53.2 | 53.2 |
| Entschäumer, Foamstar SI 2210 (BASF) | 0.4 | 0.4 | 0.4 | 0.4 | 0.4 | 0.4 |
| Verdicker, Rheovis AS 1130 (BASF) | 1.5 | 1.5 | 1.5 | 1.5 | 1.5 | 1.5 |
| Styrylenbenzolderivat, Ruco Blank OBI (Rudolf GmbH) | | 0.1 | | | | |
| Stilbendisulfonsäurederivat, Blankophor BA (Tanatex Chemicals B.V) | | | 0.1 | | | |
| Benzoxazinon-Derivat, Cartax DP fl (Clariant Plastics & Coatings GmbH) | | | | 0.1 | | |
| System auf Benzoxazolbasis, 2,5-Bis(benzoxazol-2-yl)thiophen, 20% Feststoffgehalt, Uvitex EBF 250% (Huntsman) | | | | | 0.1 | 0.01 |
| Wasser | 44.9 | 44.8 | 44.8 | 44.8 | 44.8 | 44.89 |
| | | | | | | |
| Sichtbarkeit unter UV-Licht nach 1 Tag | 0 | + | ++ | ++ | ++++ | +++ |
| Sichtbarkeit unter UV-Licht nach 6 Monaten | 0 | + | ++ | 0 | ++++ | +++ |
| Viskosität nach 1 Tag | ~ 10.000 mPas | ~ 10.000 mPas | ~ 10.000 mPas | ~ 10.000 Mpas | ~ 10.000 Mpas | ~ 10.000 Mpas |
| Viskosität nach 4 Wochen | ~ 10.000 mPas | > 50.000 mPas | > 50.000 mPas | ~ 10.000 Mpas | ~ 10.000 Mpas | ~ 10.000 Mpas |

**Tabelle 2**

| **Rohstoffe** | Ref.5 | Ref.6 | Ref.7 | Ref.8 | Ex.3 | Ex.4 |
|---|---|---|---|---|---|---|
| Styrol-Acrylester-Copolymer Dispersion, Acronal A508, 41% Feststoffgehalt, Partikelgrösse 70 nm (BASF) | 54.7 | 54.7 | 54.7 | 54.7 | 54.7 | 54.7 |
| Entschäumer, Foamstar SI 2210 (BASF) | 0.4 | 0.4 | 0.4 | 0.4 | 0.4 | 0.4 |
| Styrylenbenzolderivat, Ruco Blank OBI (Rudolf GmbH) | | 0.1 | | | | |
| Stilbendisulfonsäurederivat, Blankophor BA (Tanatex Chemicals B.V) | | | 0.1 | | | |
| Benzoxazinon-Derivat, Cartax DP fl (Clariant Plastics & Coatings GmbH) | | | | 0.1 | | |
| System auf Benzoxazolbasis, 2,5-Bis(benzoxazol-2-yl)thiophen, 20% Feststoffgehalt, Uvitex EBF 250% (Huntsman) | | | | | 0.1 | 0.01 |
| Wasser | 44.9 | 44.8 | 44.8 | 44.8 | 44.8 | 44.89 |
| | | | | | | |
| Sichtbarkeit unter UV-Licht nach 1 Tag | 0 | + | ++ | ++ | ++++ | +++ |
| Sichtbarkeit unter UV-Licht nach 6 Monaten | 0 | + | ++ | 0 | ++++ | +++ |
| Viskosität nach 1 Tag | < 800 mPas | < 800 mPas | < 800 mPas | < 800 mPas | < 800 mPas | < 800 mPas |

### Bezugszeichenliste

- 1: Untergrund
- 2: Grundierung
- 3: Bodenbelag bzw. Bodenbeschichtung

## Patentansprüche

1. Bodenaufbau auf einem Untergrund (1) umfassend eine Grundierung (2) und einen über der Grundierung befindlichen Bodenbelag (3) umfassend eine Bodenbeschichtung und/oder eine Verklebung, **dadurch gekennzeichnet, dass** die Grundierung (2) erhalten wird aus einer wässrigen Dispersion von mindestens einem Acrylpolymer enthaltend 0.001 - 0.2 Gew.-%, 0.005 - 0.1 Gew.-%, insbesondere 0.002 - 0.05 Gew.-%, 0.005 - 0.03 Gew.-%, besonderes bevorzugt 0.01 - 0.02 Gew.-%, von mindestens einem System auf Benzoxazolbasis, bezogen auf das Gesamtgewicht der wässrigen Dispersion.

2. Bodenaufbau nach Anspruch 1, wobei der Bodenbelag (3) als Bodenbeschichtung oder Verklebung mindestens eine Schicht, insbesondere eine Kunstharzschicht oder Klebschicht, umfasst oder ist, die durch Auftragen und Härten eines flüssigen oder pastösen Materials gebildet ist, wobei eine Klebschicht als Schicht vollflächig oder teilflächig aufgebracht werden kann.

3. Bodenaufbau nach Anspruch 1 oder 2, wobei die Bodenbeschichtung oder Verklebung unmittelbar über der Grundierung (2) angeordnet ist.

4. Bodenaufbau nach einem der Ansprüche 1 bis 3, wobei der Bodenbelag (3) als Bodenbeschichtung mindestens eine Kunstharzschicht umfasst oder ist oder als Verklebung mindestens eine vollflächig oder teilflächig applizierte Klebschicht umfasst.

5. Bodenaufbau nach einem der Ansprüche 1 bis 4, wobei der Bodenbelag (3) als Bodenbeschichtung eine oder mehrere Kunstharzschichten umfasst, wobei der Bodenbelag (3) bevorzugt ein Kunstharzboden ist, oder
der Bodenbelag (3) als Verklebung mindestens eine vollflächig oder teilflächig aufgebrachte Klebschicht und ein über der Klebschicht angeordnetes Flächenmaterial umfasst, wobei der Bodenbelag (3) bevorzugt ein verklebter Parkettboden ist.

6. Bodenaufbau nach einem der vorgehenden Ansprüche, wobei es sich bei dem Untergrund (1) um einen auf mineralischen Bindemitteln basierenden Untergrund handelt, insbesondere auf hydraulisch abbindenden mineralischen Bindemitteln, bevorzugt Zement oder Gips, basierenden Untergrund.

7. Bodenaufbau nach einem der vorgehenden Ansprüche, wobei das System auf Benzoxazolbasis ausgewählt ist aus der Liste bestehend aus 4,4 '- (E) -bis (benzoxazolyl) stilben, Derivate von 4,4 '- (E) -bis (benzoxazolyl) stilben, 2,5-Bis (benzoxazol-2-yl) thiophen und Derivate von 2,5-Bis (benzoxazol-2-yl) thiophen, insbesondere 2,5-Bis (benzoxazol-2-yl) thiophen.

8. Bodenaufbau nach einem der vorgehenden Ansprüche, wobei es sich bei mindestens einen Acrylpolymer um ein Copolymer eines Acrylmonomers mit einem oder mehreren anderen ethylenisch ungesättigten Monomeren handelt, insbesondere um ein Copolymer eines Acrylmonomers mit Vinylaromaten, insbesondere Styrol, besonders bevorzugt um ein Styrol-Acrylester-Copolymer.

9. Bodenaufbau nach einem der vorgehenden Ansprüche, wobei das mindestens eine Acrylpolymer eine Glasübergangstemperatur (Tg) im Bereich von -40 bis 20°C, bevorzugter 0 bis 20°C, aufweist.

10. Bodenaufbau nach einem der vorgehenden Ansprüche, wobei die wässrige Polymerdispersion eine Viskosität ein Tag nach Herstellung von < 3'000 mPas, < 1'500 mPas, < 1'000 mPas, insbesondere < 800 mPas, gemessen mit einem Brookfield DV1-Viskosimeter mit Spindel 4 bei 20 U / min bei 23°C, aufweist und eine Partikelgrösse von 10 - 70 nm, insbesondere 20 - 50 nm, aufweist und vorzugsweise eine Eindringtiefe in den Untergrund (1) von 1 - 10 mm, insbesondere 2-5 mm, aufweist.

11. Bodenaufbau nach einem der Ansprüche 1 bis 9, wobei die wässrige Polymerdispersion eine Viskosität ein Tag nach Herstellung von > 3'000 mPas, > 5'000 mPas, ≥ 8'000 mPas, insbesondere 8'000 - 20'000 mPas, gemessen mit einem Brookfield DV1-Viskosimeter mit Spindel 4 bei 20 U / min bei 23°C, aufweist und eine Partikelgrösse von 80 - 150 nm, insbesondere 90 - 120 nm, aufweist und insbesondere eine Trockenschichtdicke von 0.05 - 0.5 mm, insbesondere 0.1 - 0.2, mm, aufweist.

12. Verfahren zur Herstellung eines Bodenaufbaus auf einem Untergrund nach einem der Ansprüche 1 bis 11, umfassend
a) Grundierung des Untergrunds mit der Grundierung und
b) Aufbringen eines Bodenbelags umfassend eine Bodenbeschichtung und/oder eine Verklebung auf die Grundierung,
wobei gegebenenfalls der Bodenbelag mit einer Versiegelung versehen wird.

13. Verfahren nach Anspruch 12, wobei das Aufbringen des Bodenbelags umfasst
b1) Auftragen einer Reaktionsharz-Beschichtungszusammensetzung auf die Grundierung und Härten unter Bildung einer Kunstharzschicht oder
b2) vollflächiges oder teilflächiges Auftragen eines Klebers auf die Grundierung und Aufkleben eines Flächenmaterials auf die vollflächige oder teilflächige Klebschicht.

14. Verfahren nach Anspruch 12 oder 13, wobei das Verfahren zusätzlich den Schritt c) des Nachweises des Systems auf Benzoxazolbasis in der Grundierung umfasst, insbesondere mittels Ultraviolettstrahlung, insbesondere mit einer UV-Lampe, insbesondere nach Ausführung von Schritt b2), besonders bevorzugt 0 - 30 min danach.

## Claims

1. Floor structure on a base (1) comprising a primer (2) and a floor covering (3) which is atop the primer and comprises a floor coating and/or an adhesive bond, **characterized in that** the primer (2) is obtained from an aqueous dispersion of at least one acrylic polymer containing 0.001-0.2% by weight, 0.005-0.1% by weight, especially 0.002-0.05% by weight, 0.005-0.03% by weight, more preferably 0.01-0.02% by weight, of at least one benzoxazole-based system, based on the total weight of the aqueous dispersion.

2. Floor structure according to Claim 1, wherein the floor covering (3) as floor coating or adhesive bond comprises or is at least one layer, especially a synthetic resin layer or adhesive layer, formed by applying and curing a liquid or pasty material, where an adhesive layer can be applied as a layer over the full area or part of the area.

3. Floor structure according to Claim 1 or 2, wherein the floor coating or adhesive bond is disposed immediately atop the primer (2).

4. Floor structure according to any of Claims 1 to 3, wherein the floor covering (3) as floor coating comprises or is at least one synthetic resin layer, or as adhesive bond comprises at least one adhesive layer applied over the full area or part of the area.

5. Floor structure according to any of Claims 1 to 4, wherein the floor covering (3) as floor coating comprises one or more synthetic resin layers, where the floor covering (3) is preferably a synthetic resin floor, or
the floor covering (3) as adhesive bond comprises at least one adhesive layer applied over the full area or part of the area and a two-dimensional material disposed atop the adhesive layer, where the floor covering (3) is preferably a bonded parquet floor.

6. Floor structure according to any of the preceding claims, wherein the base (1) is a base based on mineral binders, especially a base based on hydraulically setting mineral binders, preferably cement or gypsum.

7. Floor structure according to any of the preceding claims, wherein the benzoxazole-based system is selected from the list consisting of 4,4'-(E)-bis(benzoxazolyl)stilbene, derivatives of 4,4'-(E)-bis(benzoxazolyl)stilbene, 2,5-bis(benzoxazol-2-yl)thiophene and derivatives of 2,5-bis(benzoxazol-2-yl)thiophene, especially 2,5-bis(benzoxazol-2-yl)thiophene.

8. Floor structure according to any of the preceding claims, wherein the at least one acrylic polymer is a copolymer of an acrylic monomer with one or more other ethylenically unsaturated monomers, especially a copolymer of an acrylic monomer with vinylaromatics, especially styrene, more preferably a styrene-acrylic ester copolymer.

9. Floor structure according to any of the preceding claims, wherein the at least one acrylic polymer has a glass transition temperature (Tg) in the range from -40 to 20°C, more preferably 0 to 20°C.

10. Floor structure according to any of the preceding claims, wherein the aqueous polymer dispersion has a viscosity one day after production of < 3000 mPas, < 1500 mPas, < 1000 mPas, especially < 800 mPas, measured with a Brookfield DV1 viscometer with spindle 4 at 20 rpm at 23°C, and has a particle size of 10-70 mm, especially 20-50 mm, and preferably has a penetration depth into the base (1) of 1-10 mm, especially 2-5 mm.

11. Floor structure according to any of Claims 1 to 9, wherein the aqueous polymer dispersion has a viscosity one day after production of > 3000 mPas, > 5000 mPas, ≥ 8000 mPas, especially 8000-20 000 mPas, measured with a Brookfield DV1 viscometer with spindle 4 at 20 rpm at 23°C, and has a particle size of 80-150 mm, especially 90-120 mm, and especially has a dry layer thickness of 0.05-0.5 mm, especially 0.1-0.2 mm.

12. Method of producing a floor structure on a base according to any of Claims 1 to 11, comprising
a) priming the base with the primer and
b) applying a floor covering comprising a floor coating and/or an adhesive bond to the primer, wherein the floor covering is optionally provided with a seal.

13. Method according to Claim 12, wherein the applying of the floor covering comprises
b1) applying a reactive resin coating composition to the primer and curing to form a synthetic resin layer or
b2) applying an adhesive to the primer over the full area or part of the area and bonding a two-dimensional material to the adhesive layer over the full area or part of the area.

14. Method according to Claim 12 or 13, wherein the method additionally comprises step c) of detecting the benzoxazole-based system in the primer, especially by means of ultraviolet radiation, especially with a UV lamp, especially after executing step b2), more preferably 0-30 min thereafter.

## Revendications

1. Structure de sol sur un support (1) comprenant une sous-couche (2) et un revêtement de sol (3) se trouvant par-dessus la sous-couche, comprenant un revêtement multicouche et/ou un contre-collage, **caractérisée en ce que** la sous-couche (2) est obtenue à partir d'une dispersion aqueuse d'au moins un polymère acrylique contenant 0,001 à 0,2 % en poids, 0,005 à 0,1 % en poids, en particulier 0,002 à 0,05 % en poids, 0,005 à 0,03 % en poids, plus particulièrement 0,01 à 0,02 % en poids, d'au moins un système à base de benzoxazole, par rapport au poids total de la dispersion aqueuse.

2. Structure de sol selon la revendication 1, dans lequel le revêtement de sol (3), en tant que revêtement multicouche ou contre-collage, comprend ou est au moins une couche, en particulier une couche de résine ou une couche adhésive, qui est formée par application et durcissement d'un matériau liquide ou pâteux, une couche adhésive pouvant être appliquée sous forme de couche en pleine surface ou en surface partielle.

3. Structure de sol selon la revendication 1 ou 2, dans laquelle le revêtement multicouche ou le contre-collage sont disposés directement sur la sous-couche (2) .

4. Structure de sol selon l'une des revendications 1 à 3, dans laquelle le revêtement de sol (3), en tant que revêtement multicouche, comprend au moins une couche de résine, ou encore, en tant que contre-collage, comprend au moins une couche adhésive appliquée en pleine surface ou partielle.

5. Structure de sol selon l'une des revendications 1 à 4, dans laquelle le revêtement de sol (3), en tant que revêtement multicouche, comprend une ou plusieurs couches de résine, le revêtement de sol (3) étant de préférence un sol en résine, ou le revêtement de sol (3), en tant que contre-collage, comprend au moins une couche adhésive appliquée en pleine surface ou partielle et un matériau bidimensionnel disposé sur la couche adhésive, le revêtement de sol (3) étant de préférence un parquetage collé.

6. Structure de sol selon l'une des revendications précédentes, dans laquelle le support (1) est un support à base de liants minéraux, en particulier un support à base de liants minéraux à prise hydraulique, de préférence le ciment ou le plâtre.

7. Structure de sol selon l'une des revendications précédentes, le système à base de benzoxazole étant choisi dans la liste consistant en le 4,4'-(E)-bis(benzoxazolyl)stilbène, les dérivés du 4,4'-(E)-bis(benzoxazolyl)stilbène, le 2,5-bis(benzoxazol-2-yl)thiophène et les dérivés du 2,5-bis(benzoxazol-2-yl)thiophène, en particulier le 2,5-bis(benzoxazol-2-yl)thiophène.

8. Structure de sol selon l'une des revendications précédentes, dans laquelle l'au moins un polymère acrylique est un copolymère d'un monomère acrylique et d'un ou plusieurs autres monomères à insaturation éthylénique, en particulier un copolymère d'un monomère acrylique et de composés vinylaromatiques, en particulier le styrène, plus particulièrement un copolymère styrène-acrylate.

9. Structure de sol selon l'une des revendications précédentes, l'au moins un polymère acrylique présentant une température de transition vitreuse (Tg) dans la plage de -40 à 20 °C, de préférence de 0 à 20 °C.

10. Structure de sol selon l'une des revendications précédentes, dans laquelle la dispersion aqueuse d'un polymère présente une viscosité un jour après fabrication < 3 000 mPa.s, < 1 500 mPa.s, < 1 000 mPa.s, en particulier < 800 mPa.s, mesurée à l'aide d'un viscosimètre Brookfield DV1 avec la broche 4 à 20 tr/min à 23 °C, et présente une granulométrie de 10 à 70 nm, en particulier de 20 à 50 nm, et de préférence présente une profondeur de pénétration dans le support (1) de 1 à 10 mm, en particulier de 2 à 5 mm.

11. Structure de sol selon l'une des revendications 1 à 9, dans laquelle la dispersion aqueuse d'un polymère présente une viscosité un jour après fabrication > 3 000 mPa.s, > 5 000 mPa.s, > 8 000 mPa.s, en particulier 8 000 à 20 000 mPa.s, mesurée à l'aide d'un viscosimètre Brookfield DV1 avec la broche 4 à 20 tr/min à 23 °C, et présente une granulométrie de 80 à 150 nm, en particulier de 90 à 120 nm, et présente une profondeur de couche sèche de 0,05 à 0,5 mm, en particulier de 0,1 à 0,2 mm.

12. Procédé de fabrication d'une structure de sol sur un support selon l'une des revendications 1 à 11, comprenant
a) apprêtage du support avec une sous-couche et
b) application d'un revêtement de sol, comprenant un revêtement multicouche et/ou un contre-collage, sur la sous-couche,
dans lequel éventuellement le revêtement de sol est pourvu d'une couche de scellement.

13. Procédé selon la revendication 12, dans lequel l'application du revêtement de sol comprend :
b1) l'application d'une composition de revêtement constituée d'une résine réactive sur la sous-couche et le durcissement avec formation d'une couche de résine ou
b2) l'application en pleine surface ou partielle d'un adhésif sur la sous-couche et collage d'un matériau bidimensionnel sur la couche adhésive en pleine surface ou partielle.

14. Procédé selon la revendication 12 ou 13, le procédé comprenant en outre l'étape c) de détection du système à base de benzoxazole dans la sous-couche, en particulier à l'aide d'un rayonnement ultraviolet, en particulier d'une lampe UV, en particulier après durcissement de l'étape b2), plus particulièrement 0 à 30 minutes plus tard.
